# EUROPEAN PATENT SPECIFICATION

(11) **EP 2 619 137 B1**
(45) Date of publication and mention of the grant of the patent: **20.07.2016**
(21) Application number: 11788616.8
(22) Date of filing: 19.09.2011
(51) Int. Cl.: C01G 45/12, C01G 49/00, C01G 51/00, H01M 4/136, H01M 4/58, H01M 4/62, H01M 10/052, H01M 4/02

(54) **A TWO-STEP SYNTHESIS METHOD FOR THE PREPARATION OF COMPOSITES OF INSERTION ACTIVE COMPOUNDS FOR LITHIUM-ION BATTERIES**
SYNTHESEVERFAHREN IN ZWEI SCHRITTEN ZUR HERSTELLUNG VON VERBUNDSTOFFEN FÜR DEN EINSATZ VON AKTIVEN VERBINDUNGEN FÜR LITHIUM-IONEN-BATTERIEN
PROCÉDÉ DE SYNTHÈSE À DEUX ÉTAPES POUR LA PRÉPARATION DE COMPOSITES DE COMPOSÉS ACTIFS D'INSERTION POUR BATTERIES AU LITHIUM-ION

(30) Priority: 22.09.2010 SI 201000291
(43) Date of publication of application: 31.07.2013
(73) Proprietor: Kemijski Institut, 1000 Ljubljana (SI)
(72) Inventor: BELE, Marjan, 1000 Ljubijana (SI); DOMINKO, Robert, 1270 Litija (SI); PIVKO, Maja, 1000 Ljubljana (SI); GABERSCEK, Miran, 1230 Domzale (SI)
(74) Representative: Weickmann & Weickmann PartmbB
(86) International application number: PCT/SI2011/000050
(87) International publication number: WO 2012/039687

(56) References cited:
- XING-LONG WU ET AL: "LiFePO4 Nanoparticles Embedded in a Nanoporous Carbon Matrix: Superior Cathode Material for Electrochemical Energy-Storage Devices", ADVANCED MATERIALS, WILEY VCH VERLAG, DE, vol. 21, no. 25, 12 May 2009 (2009-05-12), pages 2710-2714, XP002544783, ISSN: 0935-9648, DOI: 10.1002/ADMA200802998
- YONGGANG WANG ET AL: "The Design of a LiFePO 4 /Carbon Nanocomposite With a Core-Shell Structure and Its Synthesis by an In Situ Polymerization Restriction Method", ANGEWANDTE CHEMIE (INTERNATIONAL ED. IN ENGLISH), vol. 120, no. 39, 20 August 2008 (2008-08-20), pages 7571-7575, XP55017922, ISSN: 0044-8249, DOI: 10.1002/ange.200802539
- ROBERT DOMINKO ET AL: "Wired Porous Cathode Materials: A Novel Concept for Synthesis of LiFePO 4", CHEMISTRY OF MATERIALS, vol. 19, no. 12, 18 May 2007 (2007-05-18), pages 2960-2969, XP55017778, ISSN: 0897-4756, DOI: 10.1021/cm062843g
- ZHAO B ET AL: "Morphology and electrical properties of carbon coated LiFePO4 cathode materials", JOURNAL OF POWER SOURCES, ELSEVIER SA, CH, vol. 189, no. 1, 1 April 2009 (2009-04-01) , pages 462-466, XP025982726, ISSN: 0378-7753, DOI: 10.1016/J.JPOWSOUR.2008.12.069 [retrieved on 2009-03-16]
- YOUYONG LIU ET AL: "Enhanced electrochemical performance of carbon nanospheres-LiFePO4 composite by PEG based sol-gel synthesis", ELECTROCHIMICA ACTA, vol. 55, no. 12, 18 February 2010 (2010-02-18), pages 3921-3926, XP55018074, ISSN: 0013-4686, DOI: 10.1016/j.electacta.2010.02.032
- DOMINKO ET AL: "Impact of synthesis conditions on the structure and performance of Li2FeSiO4", JOURNAL OF POWER SOURCES, ELSEVIER SA, CH, vol. 178, no. 2, 3 March 2008 (2008-03-03) , pages 842-847, XP022509837, ISSN: 0378-7753, DOI: 10.1016/J.JPOWSOUR.2007.07.064

## Description

### Field of Invention

The subject of the present invention is a two-step synthesis method for the preparation of composites of insertion active compounds for lithium-ion batteries. The method of the invention provides for the preparation of equally distributed particles of insertion active compounds for lithium-ion batteries with a controlled particle size in a porous carbon matrix. In the first step, the synthesis method enables a formation of nanoparticles of a precursor without lithium in a porous matrix of a carbon film that is used in the second step for a solid state reaction with a lithium compound. The insertion active compounds of the invention are equally coated with a carbon layer, which renders the obtained composite electronically conductive, and moreover said compounds have optimum porosity, which allows for a good ionic wiring and consequently electrochemical activity of the compounds.

The present invention belongs to the field of chemical technology, specifically of chemical sources of electricity. It refers to a preparation of porous carbon composites of insertion active compounds based on polyanionic compounds, like phosphates, silicates, borates having a general formula LiMPO₄, Li₂MSiO₄, LiMBO₃ and mixed oxides of transition metals having a general formula LiyMXO₄, wherein M = Mn, Fe, Co and Ni, X=Ti and Al and y=1-3, including the use of electrodes made from said composites for lithium-ion batteries.

### Prior Art

Storing energy from renewable sources is a great challenge that will have a decisive impact on the energy supply of mankind in the future. The most interesting renewable sources, like solar or wind energy, generate the energy that changes in time in dependence of many parameters, which we cannot influence (day - night, weather conditions etc.). The most efficient way of storing transferrable electric power is storing chemical energy, where lithium-ion batteries with high volumetric and gravimetric energy density represent one of key storing principles. The principle of functioning of lithium-ion batteries is based on insertion, i.e. incorporation of a lithium ion into host structures. If lithium is to exchange between an insertion compound particle and the environment, typically a nonaqueous electrolyte, one condition must be met, namely the lithium ion and the electron should be able to reach the particle surface. The more there are available spots on the surface of an insertion compound for the exchange of lithium, the more smooth the exchange is, there is less compound decomposition and consequently a better yield of the entire battery is achieved. The current technologies of preparation of an electrode composite material are based on mixing and homogenisation of particles of active insertion compounds, additives enhancing electronic conductivity and a binder (creation of microstructure). A decisive role in providing homogeneity and porosity of an electrode composite is based on the quality of prepared insertion compound particles, i. e. their distribution by size, agglomeration, sintering etc. Synthesis techniques do away with this drawback by multiple grinding during the synthesis method, by a synthesis in the presence of surfactants, by a synthesis of monolithic porous compounds and by low-temperature synthesis. The composites of active insertion compounds so produced exhibit activity in lithium-ion batteries, which may, however, not be the most optimal. There are also active insertion compounds, which cannot be prepared by the synthesis methods described above. Two different synthesis techniques need to be used that allow a preparation of an active insertion compound. An example of a two-step synthesis reported in literature is a preparation of the active insertion compound LiVPO₄F (J. Barker, R. K. B. Gover, P. Burns, A. Bryan, M. Y. Saidi, and J. L. Swoyer (2005), Performance Evaluation of Lithium Vanadium Fluorophosphate in Lithium Metal and Lithium-Ion Cells, Journal of The Electrochemical Society, volume 152, pages A1776 A1779*).* The first step was a carbothermal reduction method, in which the VPO₄ precursor was obtained. In the second step, this precursor was first ground with a stoichiometric quantity of LiF and then after a solid-state reaction the electrochemically active insertion compound LiVPO₄F was prepared. The two-step synthesis for the preparation of insertion active compounds was also used in the synthesis of Li₂FeSiO₄ (Z. L. Gong, Y. X. Li, G. N. He, J. Li, and Y. Yang (2008) Nanostructured Li2FeSiO4 electrode material synthesized through hydrothermal-assisted sol-gel process Electrochemical and Solid State Letters, volume 11 pages A60-A63*).* In this method, sol was produced in the first step, which was then gelled and heated under autogenic conditions in a hydrothermal reactor. The obtained product was eventually burnt under inert atmosphere. The third two-step synthesis method known from literature is a preparation of the compound LiFeSO₄F *(*N. Recham, J.-N. Chotard, L. Dupont, C. Delacourt, W. Walker, M. Armand, J.-M. Tarascon, (2010) A 3.6 v lithium-based fluorosulphate insertion positive electrode for lithium-ion batteries, Nature Materials, Volume 9, Pages 68-74*),* where the monohydrate FeSO₄*H₂O was first prepared and used as a precursor for a substitution synthesis of exchange of H₂O with LiF in the presence of ionic liquids in a hydrothermal reactor. All three above-mentioned methods share a common characteristic: the essence of such approach is crystallographic purity of prepared compounds and not optimisation of the electrode composite in terms of better electrochemical activity.

Further two-step methods for the preparation porous carbon composites of olivinic compounds can be found in Yonggang Wang, et al: "The Design of a LiFePO4lCarbon Nanocomposite With a Core-Shell Structure and Its Synthesis by an In Situ Polymerisation Restriction Method", ANGEWANDTE CHEMIE (INTERNATIONAL ED. IN ENGLISH), vol. 120, no. 39, 20 August 2008 (2008-08-20), pages 7571-7575 and Zhao Bing, et al: "Morphology and electrical properties of carbon coated LiFePO4cathode materials", JOURNAL OF POWER SOURCES, ELSEVIER SA, CH, vol. 189, no. 1. 1 April 2009 (2009-04-01), pages 462-466*.*

### Technical Problem

There are two primary objectives in planning a preparation of insertion active compounds for lithium batteries: highest possible energy density and best possible exploitation of their theoretical activity and consequently maximum capacity. In order to reach maximum capacity in a desired time interval of operation, for instance 10-hour discharge of the battery, the active compound particles need to be wired. This means that the particles need to be connected with an ionic and electronic conductor. It can practically be achieved by a proper tailoring of the microstructure of a composite electrode with controlled distribution of the selected solid electronic conductor between active particles and with controlled porosity of the composite electrode. A further requirement is observed in the active compounds which are either poor electronic or poor ionic conductors, namely the particles of the insertion active compound must not exceed the size of several tens of nanometres. The optimum size is normally within the range from 20 nm to 50 nm. In case of such small active particles tailoring of composite electrodes becomes extremely demanding and depends on the quality of the synthesized insertion active compound, i. e. on the agglomeration level of active nanoparticles, level of particle sintering, distribution of active particle sizes.

A solution to this problem is a synthesis approach, where a surfactant or template matrix is used that is removed during or after the synthesis. Such approach leads to a non-agglomerated porous compound that can be subsequently subjected to electronic wiring. Another possible solution is use of organic compounds that release huge quantities of gases during combustion and thus form a porous composite, wherein also a carbon layer is formed allowing a good electronic wiring of the particles. However, such type of a synthesis method is not generally applicable for all insertion active compounds and further fails to provide for a controlled distribution of particle size or wall thickness between the pores.

None of known solutions offers a general recipe for a synthesis of an optional insertion active compound with poor electronic and ionic conductivity that would simultaneously also allow control of the size and distribution of active particles, good electronic wiring and a well-defined porous volume around the particles.

### Description of a Solution to the Problem

According to the invention, the task is solved for a family of porous carbon composites of insertion active compounds based on polyanionic compounds, like phosphates, silicates and borates having a general formula LiMPO₄, Li₂MSiO₄, LiMBO₃ and mixed oxides of transition metals having a general formula Li_{y}MXO₄, wherein M = Mn, Fe, Co and Ni, X=Ti and Al and y=1-3, including a preparation of electrodes from said composites for the use in lithium-ion batteries. The invention as defined in claims 1 and 11 describes a synthesis of insertion active compounds having a desired particle size in a porous carbon matrix. The insertion active compounds are obtained in two steps. In the first step a modified sol-gel method for the preparation of a homogeneous precursor is used, the second step is a solid-state synthesis between the precursor from the first step and a lithium salt. An advantage of said method over the currently known synthesis is that it can be used to prepare composite materials with a controlled size of insertion active particles, which are homogeneously distributed in a porous carbon matrix and thus well electronically and ionically wired. Such method provides for a preparation of composite materials that are suitable for cathodes in lithium batteries with high reversible capacity and high power, which is reflected in a quick charge and discharge option of the battery.

An essential novelty of the proposed two-step synthesis method is preparation of a homogeneously distributed precursor in a porous carbon matrix by a modified sol-gel method in the first step of the synthesis method. The particle size and the porosity of the obtained composite in the first step are defined with chemical and physical properties as well as by the quantity of an organic phase added in the preparation of the homogeneous precursor. The first step is followed by the second step in which the mechanism of a solid-state reaction with a lithium salt is used to obtain composites of insertion active compounds for lithium-ion batteries. The two-step synthesis method thus designed allows for an equal distribution of particles of insertion active compounds for lithium-ion batteries with a controlled size of particles in the porous carbon matrix. The use of composite materials based on the proposed two-step synthesis thus allows for a preparation of more homogeneous electrode composites and consequently better functioning of a lithium-ion battery.

### Short Description of Drawings

The invention will be explained by way of drawings and embodiments representing in:

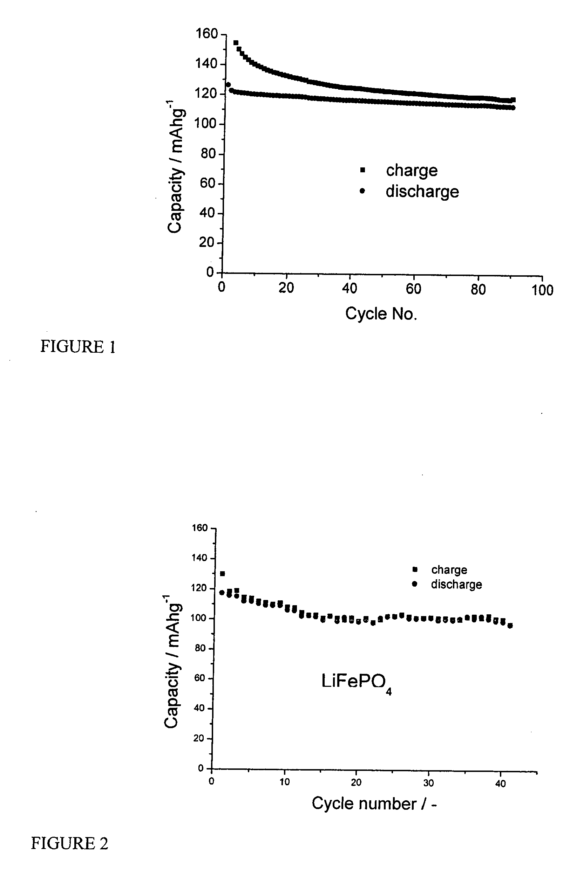

FIGURE 1: Material capacity based on LiMnPO₄ produced according to Embodiment A. 90 cycles charging/discharging are shown. Current density amounted to 9.7 mA/g of the active material. The material gives about 70 % of theoretical capacity at a temperature 60 °C.
FIGURE 2: Material capacity based on LiFePO₄ produced according to Embodiment B. 41 cycles charging/discharging are shown. Current density amounted to 20 mA/g of the active material. The material gives about 60 % of theoretical capacity at room temperature.

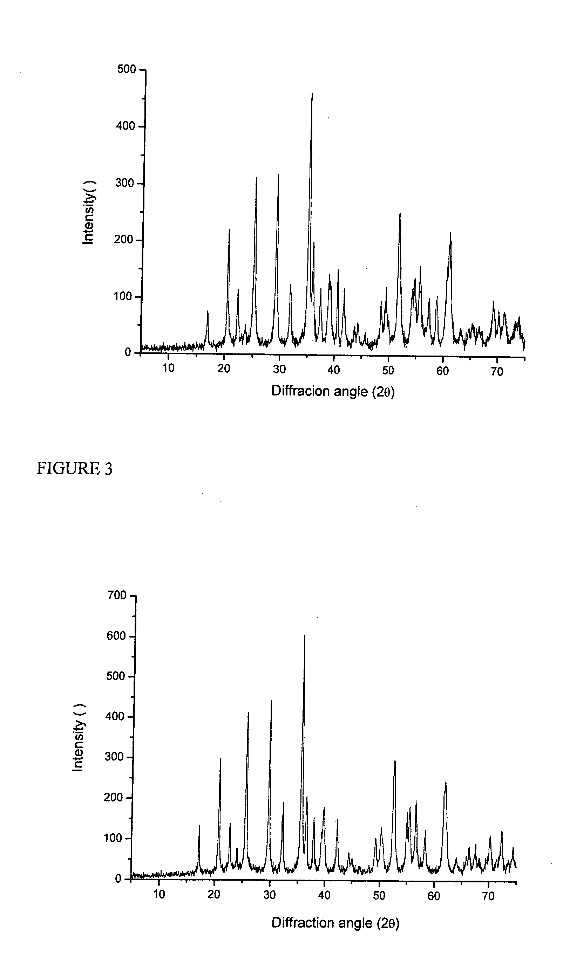

FIGURE 3: X-ray powder diffractogram of the material based on LiMnPO₄ produced according to Embodiment A. The powder diffractogram shows the prevalence of the crystalline compound LiMnPO₄ in the material.
FIGURE 4: X-ray powder diffractogram of the material based on LiFePO₄ produced according to Embodiment B. The powder diffractogram shows the prevalence of the crystalline compound LiFePO₄ in the material.

### Detailed Description of the Invention

The main novelty of the proposed two-step synthesis over known synthesis methods for the preparation of composites of insertion active compounds is that it provides for the preparation of monodispersible particles of desired size that are coated with an electronically conductive layer and are also homogeneously distributed in a porous carbon matrix, which allows the electrolyte to easily reach the particle surface. The proposed synthesis method is generally applicable for the preparation of composites of insertion active compounds that can function as cathode or anode materials in lithium-ion batteries. The essence of the proposed synthesis method is a modified sol-gel method, in which chemicals are used to enhance formation of a sol and after gelation also of a gel. After further thermal treatment of the gel a homogeneous precursor dispersed in a porous carbon matrix is obtained. The modified sol-gel method has influence on the homogeneity of distribution of chemicals on the atomic level during gel formation and also on the subsequent homogeneous distribution of the precursor and porosity of the entire matrix, which is formed due to the use of organic molecules in the formation of the gel. Particle size and porosity of the prepared precursor after the first step depend on physical and chemical properties of the organic phase used for the formation of the sol and the gel, on the way of ageing of the sol and gel, on the used gel formation catalyst, on the gel drying type, on the concentration of chemicals for the formation of the insertion compound as well as on the temperature and time of thermal treatment in the first step, heating rate, composition of used gas and thermal treatment method (stationary thermal treatment or continuous thermal treatment). The homogeneous dispersed precursor prepared in the first step of the proposed synthesis method is used in the second step for the preparation of the desired insertion active compound with a solid-state reaction, wherein a lithium salt must be added in an adequate molar ratio. In the solid-state reaction the lithium salt reacts with the homogeneously distributed precursor particles from the first step. The essential novelty of the proposed synthesis method lies in that the porous matrix, in which the precursor particles from the first step are homogeneously distributed, disables or significantly inhibits the growth of the particles in the second step. In this way various composites of insertion active compounds for lithium-ion batteries with a controlled particle size can be prepared, said composites having equally distributed particles in the porous carbon matrix. Insertion active compounds are selected either from a group of polyanionic active compounds preferably phosphates, silicates, borates having a general formula LiMPO₄, Li₂MSiO₄, LiMBO₃ or on the basis of mixed oxides of transition metals having a general formula Li_{y}MXO₄, wherein M = Mn, Fe, Co and Ni, X=Ti and Al and y=1-3. A change in parameters of both synthesis steps allows for a change in particle size of insertion active compounds in the range from 5 nm to 5000 nm and also a change in the porous volume between the particles that are occupied by the carbon phase created during the decomposition of the organic component in the gel. In dependence on requirements present in the synthesis of an insertion active compound for lithium-ion batteries various organic precursors can be used, such as ethyl cellulose, gelatin, hydroxyl methylcellulose, hydroxypropyl starch, guar gum, sugars, maltodextrin, methylcellulose, polydextrose, sugar, tragacanth gum, xantan gum, oxalic acid, citric acid. Surfactants like hexadecyltriamonium bromide, decyltrimethylamonium bromide, cetyl trimethylamonium bromide, dodecyl amonium chloride, cetylpiridinum chloride can also be used as organic precursors. Carbon in the form of graphite, carbon black, nanotubes can be used in addition as well.

The share of used organic phase in the first synthesis step can range from 5 % by weight to 95 % by weight. The source of transition metal in the first step is divalent and trivalent salts based on manganese, nickel, iron, cobalt or a mixture thereof, wherein the atomic share of an individual salt in the mixtures can range from 0.5 % to 99.5 %. Depending on the desired chemical composition of the insertion active compound the following chemicals can be added in the first step: chemicals based on phosphate, borate, sulphate, silicate or titanium dioxide salts or mixtures thereof, wherein the share of an individual salt in the mixtures can range from 0.5 % to 99.5 %. The starting chemicals and the organic phase in the needed ratio are diluted in a solvent based on polar or non-polar liquids. The obtained sol is aged at room or increased temperature within a time interval of 1 hour to 10 days, then gel formation is initiated with initiators, like ethyl cellulose, gelatin, hydroxymethyl cellulose, hydroxypropyl starch, guar gum, sugars, maltodextrin, methylcellulose, polydextrose, sugar, tragacanth gum, xantan gum, oxalic acid, citric acid and the precursor prepared by the modified sol-gel method is eventually dried at a temperature ranging from -195 °C to 120 °C. The drying method can be slow solvent evaporation, solvent evaporation under supercritical conditions, aerogel drying, drying of dispersed gel in a selected atmosphere like air, nitrogen, argon, vacuum and at a selected temperature in the range from -195 °C to 120 °C. The dried gel thus contains chemicals distributed on the atomic level and chemically co-ordinated with the used organic phase. The morphology of the dried gel depends on the drying type. The drying type has influence on the physical and chemical properties of the dried gel. The latter can have influence on the size of the formed particles and on the porosity of the structures resulting from the thermal treatment in protected atmosphere, which is preferably argon, nitrogen, helium, carbon dioxide, carbon monoxide or a mixture thereof in any ratio. Before thermal treatment the dried gel is bubbled for at least 30 minutes with a flow rate from 10 - 500 mL/min in a flow tube furnace. The temperature of thermal treatment normally does not lie below 400 °C and does not exceed 1400 °C, heating rate amounts to 0.1 °C/min to 200 °C/min, thermal treatment time is from 1 hour to 96 hours. Cooling rate can be from 0.1 °C/min to very high rates, which are achieved by a method of sample cooling by means of liquid nitrogen having a temperature -196 °C. The product obtained after the completed thermal treatment is a homogeneous precursor that is used in the second step for the solid-state reaction with a Li(I) salt, wherein the Li(I) salt can be Li-acetate, Li-citrate, LiOH, Li₂CO₃, LiNO₃, LiCl, Li₂SO₄, Li₂SO₃ Li₁H₂PO₄, Li₂HPO₄, Li₃PO₄, LiCN, Li-benzoate, Li-acetyl acetonate, alkoxide lithium salts. The needed lithium salt and the homogeneous precursor need first be homogenised in the needed stoichiometric ratio by grinding in the time interval ranging from 1 minute to 24 hours. Homogenisation with grinding may comprise grinding in a high energy mill, homogenisation in a low-energy ball mill, grinding with a pestle in a mortar or the like. After grinding, the mixture of the homogeneous precursor from the first step and lithium are thermally treated in a flow-through protecting atmosphere, which is preferably argon, nitrogen, helium, carbon dioxide, carbon monoxide or a mixture thereof in any ratio at a temperature ranging from 200 °C to 950 °C. The heating rate ranges from 0.1 °C/min to 200 °C/min, the time of thermal treatment is from 1 minute to 96 hours. The cooling rate may be from 0.1 °C/min to very high rates that are reached by the method of sample cooling by means of liquid nitrogen having a temperature -196 °C. The composites of insertion active compounds prepared by this method are used as the electrode material for lithium-ion batteries. The electrodes are prepared by homogenising the active material with electronically conductive carbon black and a binder and the homogeneous suspension is then applied on the surface of the current carrier. Typical application of the active ingredient onto the current carrier is 1-10 mg/cm². The current carrier can be an aluminium foil or mesh, a copper foil or mesh, a steel foil or mesh or any other compatible current carrier. The binder can be polytetrafluoro ethylene, polyvinylidene fluoride, polyimide, ethylen-propylen-dien-terpolymer and similar polymers. Carbon black, graphite, metallic particles or an electronically conductive polymer can serve as an electronic conductor. The ratio between the additives, i. e. binder, electronic conductor and the active compound ranges from 0.1:9.9 to 9:1. The prepared electrochemically active electrodes based on the composites of insertion active compounds are incorporated into a lithium-ion battery with an adequate opposite electrode and a commercial nonaqueous electrolyte and all together are separated by a commercial separator, closed into an air-tight housing that is provided with external pins for electrodes.

### Description of Solution with Embodiments:

### A) Preparation of a composite material of the insertion active compound LiMnPO₄ incorporated into a porous carbon matrix comprises the following steps:

**a)** *Preparation of a homogeneously dispersed precursors in a porous carbon matrix by the sol-gel method*: a homogeneous mixture of reactants is prepared first. While stirring, 0.1- 20 g of manganese acetate (C₄H₆MnO₄×4H₂O, Fluka Cat. no.: 63537), 0.1-20 g of citric acid (C₆H₈O₇, Sigma-Aldrich Cat.no.: C8,315-5) are dissolved. To this solution is then added a suitable quantity of phosphoric acid (H₃(PO)₄, Merck, Cat. no.: 1.00573.1000) to obtain an adequate molar ratio Mn:P is 1:1. If needed, the homogeneous mixture of reactants is dried before thermal treatment. Then a precursor is formed in the form of nanoparticles Mn₂P₂O₇, which are homogeneously distributed in the porous carbon matrix with thermal treatment under controlled conditions. The homogeneous mixture of reactants is therefore heated with a rate 0.1-200 °C/min to 400 °C - 1000 °C in inert or reduction atmosphere for 0.1-10 h. The so formed composite contains wired nanoparticles Mn₂P₂O₇, which are homogeneously distributed in the porous carbon matrix.
b) *Synthesis of the insertion active compound LiMnPO₄ incorporated into a porous carbon matrix with a solid-state reaction*: the composite prepared in the first step is added an adequate quantity of LiOH after the solid-state reaction in the second step in order to obtain the adequate molar ratio Li:Mn, which must amount to 1:1. The mixture so formed is homogenised with continuous grinding in a time interval 0.1-6 h. The final composite material is obtained with thermal treatment of the homogeneous mixture under controlled conditions by being heated with a rate 0.1-200 °C/min to a temperature from 400 °C to 1000 °C in an inert atmosphere of argon for 0.1-20 h. After heating, the sample is cooled to room temperature with a rate 0.1-200 °C/min. The obtained product contains homogeneously distributed insertion active particles of LiMnPO₄ in a porous carbon matrix.
c) *Characterisation:* Prior to use, the quality of the obtained material is checked with X-ray powder analysis. If the diffractogram corresponds to the required structure, the obtained material is used for the preparation of a cathodic composite for lithium-ion batteries.

### B) Preparation of a composite material of the insertion active compound LiFePO₄ incorporated into a porous carbon matrix.

The preparation method equals that in Embodiment A, only that iron citrate is used instead of manganese acetate in the preparation of the homogeneous mixture of reactants.

### C) Preparation of a composite material of the insertion active compound LiMnBO₃ incorporated into a porous carbon matrix.

The preparation method equals that in Embodiment A, only that boronic acid (H₃BO₃, Aldrich Cat. no.: 23,646-2) is used instead of phosphoric acid in the preparation of the homogeneous mixture of reactants.

### D) Preparation of a composite material of the insertion active compound LiFeBO₃ incorporated into a porous carbon matrix.

The preparation method equals that in Embodiment A, only that iron citrate (C₆H₅FeO₇, Sigma Cat. no.: F6129) and boronic acid (H₃BO₃, Aldrich Cat. no.: 23,646-2) are used instead of manganese acetate and phosphoric acid in the preparation of the homogeneous mixture of reactants.

### E) Preparation of a composite material of the insertion active compound Li₂FeSiO₄ incorporated into a porous carbon matrix comprises the following steps:

**a)** *Preparation of a homogeneously dispersed precursor in a porous carbon matrix by the sol-gel method:* a homogeneous mixture of reactants is prepared first. 0.1-20 g of silica (SiO₂, Riedel-de Haen Cat. no.: 13760) is dispersed in ultrasonic bath. To this solution an adequate quantity of iron citrate (C₆H₅FeO₇, Sigma Cat. no.: F6129) is added to obtain an adequate molar ratio Fe:Si is 1:1. While stirring, 0.1-20 g of citric acid (C₆H₈O₇, Sigma-Aldrich Cat. No.: C8,315-5) and 0.1-20 g of oxalic acid (C₂H₂O₄×2H₂O, Fluka Cat. no.: 75702) are added. If needed, the homogeneous mixture of reactants is dried before thermal treatment. Then a precursor is formed in the form of nanoparticles or amorphous iron-silicate compounds, which are homogeneously distributed in the porous carbon matrix with thermal treatment under controlled conditions. The homogeneous mixture of reactants is therefore heated with a rate 0.1-200 °C/min to 400 °C - 1000°C in inert or reduction atmosphere for 0.1-10 h. The so formed composite contains wired nanoparticles or amorphous iron-silicate compounds, which are homogeneously distributed in the porous carbon matrix.
b) *Synthesis of the insertion active compound Li₂FeSiO₄ incorporated into a porous carbon matrix with a solid state reaction:* the composite prepared in the first step is added an adequate quantity of LiOH (Sigma-Aldrich, Cat. no.: 442410) after the solid-state reaction in the second step in order to obtain the adequate molar ratio Li:Fe, which must amount to 2:1. The mixture so formed is homogenised with continuous grinding in a time interval 0.1-6 h. The final composite material is obtained with thermal treatment of the homogeneous mixture under controlled conditions by heating it with a rate 0.1-200 °C/min to a temperature from 400 °C to 1000 °C in an inert atmosphere of argon for 0.1-20 h. After heating, the sample is cooled to room temperature with a rate 0.1-200 °C/min. The obtained product contains homogeneously distributed insertion active particles of Li₂FeSiO₄ in a porous carbon matrix.

### F) Preparation of a composite material of the insertion active compound Li₂MnSiO₄ incorporated into a porous carbon matrix:

The preparation method equals that in Embodiment E, only that manganese acetate (C₄H₆MnO₄x4H₂O, Fluka Cat.no.: 63537) is used instead of iron citrate in the preparation of the homogeneous mixture of reactants and no oxalic acid is added.

### G) Electrochemical characterisation of insertion active materials:

*a) Preparation of the electrode composites:* the homogeneously distributed insertion active compound in a porous carbon matrix is used for the preparation of the electrode composite in a way that 10-99 % by weight of the prepared active material based on the selected insertion compound is ground in a container, 1-50 % by weight of highly conductive carbon black or another additive enhancing electronic conductivity (like graphite, metallic particles, electronically conductive polymers) and 0-50 % by weight of a binder (polytetrafluoro ethylene, polyvinylidene fluoride, polyimide, ethylen-propylen-dien-terpolymer and similar polymers) are added. The electrode composite is equally applied on the current carrier (preferably a compatible metallic foil or mesh) and pressed, so that the final thickness of the application ranges from 0.001 mm to 0.5 mm, wherein the porous volume amounts to 10-90 %.

*Assembling the battery;* a working electrode with 0.1-100 mg/cm² of the insertion active compound is immersed in an aprotic electrolyte (typically 1 M solution of LiPF₆ in a mixture of ethylenecarbonate and dimethylcarbonate). An electrode from metallic lithium, graphite or a similar anode active material for lithium-ion batteries is used as a negative electrode. The electrodes assembled into an active electrochemical element are separated by a typical lithium ion permeable separator for lithium batteries. The electrochemical element is built into a previously prepared battery housing in a dry chamber (argon atmosphere with water content < 1ppm (1mg/L)). The battery thus prepared is then tested for its capacity and reversibility.

*Battery testing:* the current guides of the prepared battery are connected to the cables of an instrument that allows use of various values of constant electric current and simultaneous measurement of a change in battery voltage in time. The operating voltage range of the battery is limited in oxidation with a voltage from 4 V regarding metallic lithium up to 4.6 V regarding metallic lithium and in reduction with a voltage from 1 V regarding metallic lithium to 2 V regarding metallic lithium. The battery capacity is calculated from the flown electric charge normalised by a mass of electrode composite.

## Claims

1. Two-step synthesis method for the preparation of composites of insertion active compounds for lithium-ion batteries consisting of porous carbon composites of active compounds based on polyanionic compounds, such as phosphates, silicates, borates having a general formula LiMPO₄ Li₂MSiO₄, LiMBO₃ and mixed oxides of transition metals having a general formula Li_{y}MXO₄, wherein M = Mn, Fe, Co and Ni, X = Ti and Al and y = 1 to 3, **characterized in that** a homogeneously dispersed precursor in a porous carbon matrix is prepared by a sol-gel method in the first step and used in the second step in the solid-state reaction mechanism for the preparation of composites of insertion active compounds for lithium-ion batteries.

2. Two-step synthesis method according to Claim 1, **characterized in that** the homogenously dispersed precursor is in the form of particles, which are a compound without lithium and are of equal size and equally distributed in a porous carbon matrix.

3. Two-step synthesis method according to Claims 1 and 2, **characterized in that** manganese, iron, cobalt, nickel salts or a mixture thereof are used for the preparation of the homogeneously dispersed precursor, wherein the atomic share of each salt is in the range from 0.5 % to 99.5 %.

4. Two-step synthesis method according to Claims 1 and 2, **characterized in that** phosphate, borate, silicate, titanium dioxide salts or a mixture thereof are used for the preparation of the homogeneously dispersed precursor, wherein the share of each individual compound ranges from 0.5 % to 99.5 %.

5. Two-step synthesis method according to Claims 1 and 2, **characterized in that** organic precursors and optionally carbon are used for the preparation of the homogeneously dispersed precursor, wherein the share of the used organic precursor and carbon in the first step ranges from 5 % by weight to 95 % by weight.

6. Two-step synthesis method according to Claims 1 to 5, **characterized in that** the salts and the organic precursor are either dissolved or dispersed in a liquid medium and the solvent evaporated by slow evaporation, by solvent evaporation under supercritical conditions, by aerogel drying or drying in a selected atmosphere like air, nitrogen, argon, vacuum or at a selected temperature in the range from -195 °C to +120 °C.

7. Two-step synthesis method according to Claims 1 to 6, **characterized in that** the dried mixture of salt and organic precursor is thermally treated in protecting atmosphere, preferably in argon, nitrogen, helium, carbon monoxide, carbon dioxide or a mixture thereof in any ratio.

8. Two-step synthesis method according to Claims 1 to 7, **characterized in that** the temperature of thermal treatment of the mixture of salt and organic precursor lies in the range from 400 °C to 1400 °C, wherein the heating/cooling rate in thermal treatment is in the range from 0.1 °C/min to 200 °C/min.

9. Two-step synthesis method according to Claims 1 to 8, **characterized in that** to the homogeneously dispersed precursor from the first step are added Li(I) salts (where the Li(I) salt can be Li-acetate, Li-citrate, LiOH, Li₂CO₃, LiNO₃, LiCl, Li₂SO₄, Li₂SO₃, Li₁H₂PO₄, Li₂HPO₄, Li₃PO₄, LiCN, Li-benzoate, Li-acetyl acetonate, lithium salts of alkoxides) in the needed stoichiometric ratio and all together is ground for a time interval of 1 min to 24 hours.

10. Two-step synthesis method according to Claims 1 to 9, **characterized in that** the solid-state reaction in the second step is carried out at a temperature ranging from 200 °C to 950 °C.

11. Insertion active compound for lithium-ion batteries **characterized in that** it is produced by the method according to Claims 1 to 10, which can be used as an electrochemically active electrode in lithium-ion batteries if an adequate binder and an electronic conductor are added.

12. Electrochemically active electrode comprising the insertion active compound according to Claim 11, **characterized in that** the used binder is polytetrafluoro ethylene, polyvinylidene fluoride, polyimide, ethylenepropylene-diene-terpolymer and similar polymers and the used electronic conductor is carbon black, graphite, metallic particles or an electronically conductive polymer.

13. Lithium-ion battery, **characterized in that** it comprises the electrochemically active electrode according to claim 12.

## Patentansprüche

1. Zweistufiges Syntheseverfahren zur Herstellung von Verbundstoffen für den Einsatz von aktiven Verbindungen für Lithium-lonen-Batterien bestehend aus porösen Kohlenstoffverbundstoffen aktiver Verbindungen auf der Basis von polyanionischen Verbindungen wie Phosphaten, Silikaten, Boraten der allgemeinen Formel LIMPO₄, Li₂MSVO₄. LiMBO₃ und Mischoxiden von Übergangsmetallen mit der allgemeinen Formel Li_{y}MXO, worin M = Mn, Fe, Co und Ni, X = Ti und Al und y = 1 bis 3 sind,
**dadurch gekennzeichnet, dass**
in einer ersten Stufe ein in einer porösen Kohlenstoffmatrix homogen dispergierter Prekursors nach dem Sol-Gel-Verfahren hergestellt und in einer zweiten Stufe in einem Solid-State-Reaktionsmechanismus zur Herstellung von Verbundstoffen für den Einsatz aktiver Verbindungen für Lithium-lonen-Batterien verwendet wird.

2. Zweistufiges Syntheseverfahren nach Anspruch 1,
**dadurch gekennzeichnet, dass**
der homogen dispergierte Prekursor in Form von Partikeln vorliegt, die eine Verbindung ohne Lithium und gleichgroß und gleichmäßig in einer porösen Kohlenstoffmatrix verteilt sind.

3. Zweistufiges Syntheseverfahren nach Anspruch 1 und 2,
**dadurch gekennzeichnet, dass**
Mangan-, Eisen-, Kobalt-, Nickelsalze oder eine Mischung davon für die Herstellung des homogen divergieren Prekursors verwendet werden, worin der Atomanteil jedes Salzes im Bereich von 0,5 % bis 99,5 % liegt.

4. Zweistufiges Syntheseverfahren nach Anspruch 1 und 2,
dadurch gekenntzeichnet, dass
Phosphat-, Borat-, Silikat-, Titandioxid-Salze oder eine Mischung davon für die Herstellung des homogen dispergierten Prekursors verwendet werden, worin der Anteil jeder Einzelverbindung im Bereich von 0,5% bis 99,5 % liegt.

5. Zweistufiges Syntheseverfahren nach Anspruch 1 und 2,
**dadurch gekennzeichnet, dass**
organische Prekursor und ggf. Kohlenstoff zur Herstellung des homogen dispergierten Prekursors verwendet werden, worin der Anteil der in der ersten Stufe verwendeten organischen Prekursors und des Kohlenstoffs im Bereich von 5 Gew.-% bis 95 Gew.% liegt.

6. Zweistufiges Syntheseverfahren nach den Ansprüchen 1 bis 5,
**dadurch gekennzeichnet, dass**
die Salze und der organische Prekursor entweder in einem flüssigen Medium gelöst oder dispergiert sind und das Lösungsmittel durch langsame Verdampfung, durch Lösungsmittelverdampfung unter überkritischen Bedingungen, durch Aeroget-Trocknung oder Trocknung in einer ausgewählten Atmosphäre wie Luft, Stickstoff, Argon, Vakuum oder bei einer ausgewählten Temperatur im Bereich von -195°C. bis +120°C. verdampft wird.

7. Zweistufiges Syntheseverfahren nach den Ansprüchen 1 bis 6,
**dadurch gekennzeichnet, dass**
die Trockenmischung aus Salz und dem organischem Prekursor in einer Schutzatmosphäre, vorzugsweise Argon, Stickstoff, Helium, Kohlenmonoxid, Kohlendioxid oder einer Mischung davon in jedem beliebigen Verhältnis wärmebehandelt wird.

8. Zweistufiges Syntheseverfahren nach den Ansprüchen 1 bis 7,
**dadurch gekennzeichnet, dass**
die Temperatur bei der Wärmebehandlung der Mischung aus Salz und organischem Prekursor im Bereich von 400°C bis 1400°C liegt, wobei das Erwärmungs-/Abkühlungs-Verhältnis bei der Wärmebehandlung im Bereich von 0,1°C/min bis 200°C/min liegt.

9. Zweistufiges Syntheseverfahren nach den Ansprüchen 1 bis 8,
**dadurch gekennzeichnet, dass**
der homogen dispergierte Prekursor aus dem ersten Schritt zu Li(I)-Salzen im stöchiometrisch erforderlichen Verhältnis (worin das Li(I)-Salz Li-Acetat, Li-Citrat, LiOH, Li₂CO₃, LiNO₃, LiCl, Li₂SO₄, Li₂SO₃, Li₁H₂PO₄, Li₂HPO₄, Li₃PO₄, LiCN, Li-Benzoat, Li-Acetylacetonat oder Lithiumsalze von Alkoxiden sein können) hinzugegeben wird und alles zusammen während eines Zeitraums von 1 min bis 24 h gemahlen wird.

10. Zweistufiges Syntheseverfahren nach den Ansprüchen 1 bis 9,
dadurch gekenntzeichnet, dass
die Solid-State-Reaktion der zweiten Stufe bei einer Temperatur im Bereich von 200°C bis 950°C durchgeführt wird.

11. Insertions-Wirkstoff für Lithium-lomen-Batterien,
**dadurch gekennzeichnet, dass**
er nach dem Verfahren nach den Ansprüchen 1 bis 10 hergestellt wird und als elektrochemisch aktive Elektrode bei Lithium-lonen-Batterien verwendet werden kann, wenn ein geeignetes Bindemittel und ein Elektronenleiter hinzugegeben werden.

12. Elektrochemisch aktive Elektrode enthaltend den Insertions-Wirkstoff nach Anspruch 11.
**dadurch gekennzeichnet, dass**
das verwendete Bindemittel Polytetrafluorethylen, Polyvinylidenfluorid, Polyimid, Ethylen-Propylen-Dien-Terpolymer und ähnliche Polymere und der verwendete Elektronenleiter Karbonschwarz, Graphit, Metallpartikel oder ein elektrisch leitfähiges Polymer sind.

13. Lithium-lonen-Batterie,
**dadurch gekennzeichnet, dass**
sie die elektrochemisch aktive Elektrode nach Anspruch 12 umfasst

## Revendications

1. Procédé de synthèse à deux étapes pour la préparation de composites de composés actifs d'insertion pour batteries au lithium-ion constitués de composites de carbone poreux de composés actifs basés sur des composés polyanioniques, tels que des phosphates, des silicates, des borates ayant une formule générale LiMPO₄, Li₂MSiO₄, LiMBO₃ et des oxydes mixtes de métaux de transition ayant une formule générale LiyMXO₄ où M = Mn, Fe, Co et Ni, X = Ti et Al et y = 1 à 3, **caractérisé en ce qu'**un précurseur dispersé de manière homogène dans une matrice de carbone poreux est préparé par un procédé sol-gel dans la première étape et utilisé dans la seconde étape dans le mécanisme, de réaction à l'état solide pour la préparation de composites de composés actifs d'insertion pour des batteries au lithium-ion.

2. Procédé de synthèse à deux étapes selon la revendication 1, **caractérisé en ce que** le précurseur dispersé de manière homogène se présente sous la forme de particules qui sont un composé sans lithium et sont de taille égale et distribuées de manière égale dans une matrice de carbone poreux.

3. Procédé de synthèse à deux étapes selon les revendications 1 et 2, **caractérisé en ce que** l'on utilise des sels de manganèse, de fer, de cobalt, de nickel ou un mélange de ceux-ci pour la préparation du précurseur dispersé de manière homogène, dans lequel la part atomique de chaque sel se situe dans la plage de 0,5 % à 99,5 %.

4. Procédé de synthèse à deux étapes selon les revendications 1 et 2, **caractérisé en ce que** l'on utilise des sels de phosphate, de borate, de silicate, de dioxyde de titane ou un mélange de ceux-ci pour la préparation du précurseur dispersé de manière homogène, dans lequel la part de chaque composé individuel se situe dans une plage de 0,5 % à 99,5 %,

5. Procédé de synthèse à deux étapes selon les revendications 1 et 2, **caractérisé en ce que** l'on utilise des précurseurs organiques et éventuellement du carbone pour la préparation du précurseur dispersé de manière homogène, dans lequel la part du précurseur organique utilisé et du carbone dans la première étape se situe dans une plage de 5 % en poids à 95 % en poids.

6. Procédé de synthèse à deux étapes selon les revendications 1 à 5, **caractérisé en ce que** les sels et le précurseur organique sont dissous ou dispersés dans un milieu liquide et le solvant évaporé par lente évaporation, par évaporation par solvant dans des conditions supercritiques, par séchage par aérogel ou séchage dans une atmosphère choisie comme l'air, l'azote, l'argon, un vide ou à une température choisie dans la plage de -195°C à +120°C.

7. Procédé de synthèse à deux étapes selon les revendications 1 à 6, **caractérisé en ce que** le mélange séché de sel et de précurseur organique est traité à chaud dans une atmosphère protectrice, de préférence de l'argon, de l'azote, de l'hélium, du monoxyde de carbone, du dioxyde de carbone ou un mélange de ceux-ci dans un rapport quelconque.

8. Procédé de synthèse à deux étapes selon les revendications 1 à 7, **caractérisé en ce que** la température de traitement thermique du mélange de sel et de précurseur organique se situe dans la plage de 400°C à 1400°C, dans lequel la cadence de chauffage/refroidissement dans le traitement thermique se situe dans la plage de 0,1°C/min à 200°C/min.

9. Procédé de synthèse à deux étapes selon les revendications 1 à 8, **caractérisé en ce que** l'on ajoute au précurseur dispersé de manière homogène de la première étape des sels de Li(I) (où le sel de Li(I) peut être de l'acétate de Li, du citrate de Li, LiOH, Li₂CO₃, LiNO₃, LiCl, Li₂SO₄, LiSO₃, Li₁H₂PO₄, Li₂HPO₄, Li₃PO₄, LiCN, du benzoate de Li, de l'acétylacétonate de Li, des sels de lithium d'alcoxydes) dans le rapport stoechiométrique nécessaire et l'on broie le tout conjointement sur un intervalle de temps de 1 min à 24 heures.

10. Procédé de synthèse à deux étapes selon les revendications 1 à 9, **caractérisé en ce que** la réaction à l'état solide de la seconde étape se fait à une température allant de 200°C à 950°C.

11. Composé actif d'insertion pour batteries au lithium-ion, **caractérisé en ce qu'**il est produit par le procédé selon les revendications 1 à 10, qui peut être utilisé comme électrode électrochimiquement active dans des batteries au lithium-ion si un liant adéquat et un conducteur électronique sont ajoutés.

12. Electrode électrochimiquement active comprenant le composé actif d'insertion selon la revendication 11, **caractérisée en ce que** le liant utilisé est le polytétrafluoroéthylène, le poly(fluorure de vinylidène), un polyimide, un terpolymère d'éthylène-propylène-diène et des polymères similaires et le conducteur électronique utilisé est le noir de carbone, le graphite, des particules métalliques ou un polymère électroniquement conducteur.

13. Batterie au lithium-ion, **caractérisée en ce qu'**elle comprend l'électrode électrochimiquement active selon la revendication 12.
